# EUROPEAN PATENT APPLICATION

(11) **EP 1 154 433 A2**
(43) Date of publication of application: **14.11.2001**
(21) Application number: 01303570.4
(22) Date of filing: 19.04.2001
(51) Int. Cl.: G11B 27/28, G11B 27/11, G11B 27/10, G06F 17/30

(54) **Internet-based indices for pre-recorded broadcast information**

(30) Priority: 08.05.2000 US 566338
(71) Applicant: AT&T Corp., New York, NY 10013-2412 (US)
(72) Inventor: Civanlar, Mehmet Reha, Red Bank, NJ 07701 (US)
(74) Representative: Asquith, Julian Peter

(57) **Abstract**

An index-on-demand for pre-recorded broadcast programs (such as television or radio programs) is available through the Internet and may be downloaded and used to "cue" a player (such as a VCR) to a selected portion of a pre-recorded program. The index menu displayed on the subscriber's screen includes a number of identified segments within the recorded broadcast. The user then utilizes the displayed index to select a particular segment, and the identity of the selection is communicated to the player to cue up that particular segment and begin the playback.

## Description

### Technical Field

The present invention relates to the provisioning of an index for on-demand playback of a pre-recorded broadcast program (audio, video, or both) and, more particularly, to an index downloadable over the Internet that can be synchronized with the pre-recorded broadcast and used to "cue" into any desired index location within the recorded program.

### Background of the Invention

It is well-known that broadcasting is the most efficient way of disseminating information to a very large number of receivers. The efficiency becomes vital for conveying large amounts of information, such as video, as manifested by the popularity of broadcast television. This efficiency, however, exhibits at least two different inherent limitations. In particular, broadcasting over media such as radio or television is considered somewhat restrictive in that broadcast times cannot be tailored for individual subscribers and, further, the broadcast must be viewed in the time sequence within which it was transmitted (i.e., the broadcast must be received sequentially). The first limitation can be alleviated by using a personal recorder (such as a VCR for television programs or cassette recorder for audio programs) for "time-shifted" viewing/listening.

However, when viewing a taped program, there is still no mechanism for viewing various segments "out of order". For example, if one wanted to see only the weather report segment of a news broadcast, one would need to search using the "fast forward" mechanism to come to the weather portion of the broadcast. Such a process is often too tedious to use for such a case. In another context, one may wish to listen to only a portion of a pre-recorded concert. "Fast forwarding" through an audio tape to cue up to the selected piece of music is even more problematic that using the same process in a video system, since there are no visual clues available to help guide the listener to the correct tape location.

Thus, a need remains in the prior art for a technique of indexing recorded broadcast information that allows the user to immediately cue into one or more selected portions of the pre-recorded work.

### Summary of the Invention

The need remaining in the prior art is addressed by the present invention, which relates to the use of an index for on-demand playback of a recorded broadcast program (audio, video, or both) and, more particularly, to an index that is downloaded over the Internet and synchronized with the pre-recorded broadcast to "cue" into any desired index location within the recorded program.

In accordance with the present invention, a time-based index is created that includes separate indices to various segments of a pre-recorded program. The index can be created either manually or automatically, and created by either the broadcaster or a third party. In one embodiment, the indices include textual descriptions of each portion of a recorded program. Alternatively, relatively short audio or video clips may be included as part of the indices. Any combination of text, audio and video may also be used to identify each segment (i.e., "clip") within the recorded program. The created index is stored on a server that may be located and accessed via the Internet (or other equivalent data network).

To use the "index-on-demand" service of the present invention, one first records a program in a conventional manner, on either a VCR (or a video program), a tape recorder (for audio), or alternatively, directly onto a computer as a digital file. When the user wishes to access the recorded program, he logs onto the Internet (or any other suitable data network) and locates an "index-on-demand" service provider. Once found, the user browses/searches (using, for example any well-known web browser) through the list of indexed programs until finding the one that coincides with his recorded program. The index is then downloaded onto the user's computer. A connection between the computer and recording device is required (existing by default in the case where the computer is used as the recording device), so that the user may "click" on any desired listing within the displayed index to cue the recording to begin at the selected program segment.

In one embodiment of the present invention, a brief audio segment may be included as a "header" within the downloaded index to allow for the index to be synchronized with the recording.

Other aspects and embodiments of the present invention will become apparent during the course of the following discussion and by reference to the accompanying drawings.

### Brief Description of the Drawings

Referring now to the drawings,
FIG. 1 illustrates an exemplary environment suitable for using the index-on-demand service of the present invention;
FIG. 2 is an exemplary initial computer screen presented by an "index-on-demand" service provider;
FIG. 3 contains a diagram of an exemplary index included textual references to each segment within the index;
FIG. 4 is a diagram of an index using "audio clip" references for each segment within the index; and
FIG. 5 contains a diagram of an index using "video clip" references for each segment within an index.

### Detailed Description

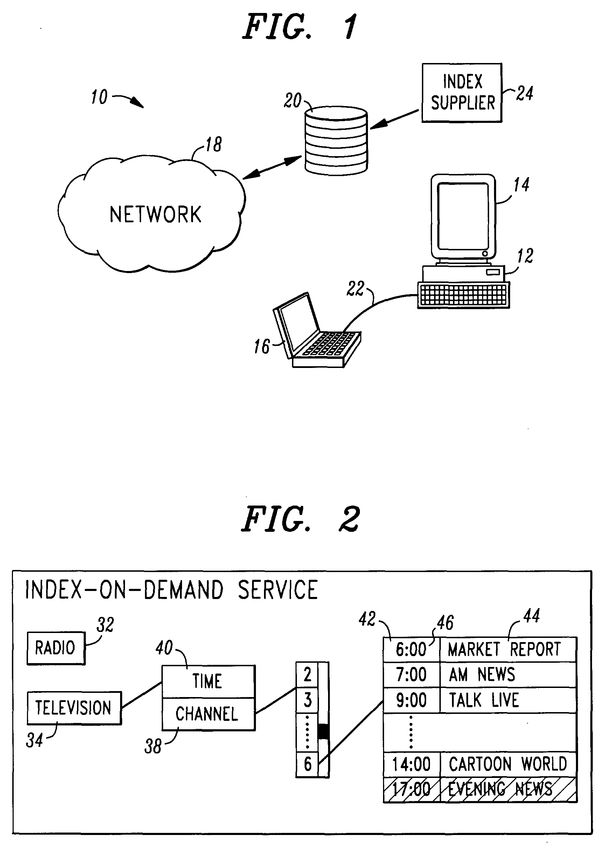

An exemplary arrangement 10 for using the index-on-demand service of the present invention is illustrated in FIG. 1. In this particular embodiment, a user has recorded a television broadcast on a VCR 12 for playback on an associated television monitor 14. For example, the user may have recorded a dinner time news program to be played back at a more convenient hour. The user then uses a computer 16 to access a data network 18 (such as the Internet) to be in communication with an index-on-demand server 20. As will be explained in detail below, index-on-demand server 20 contains numerous indices (which may be created by a broadcaster or a third party). The user then browses (or searches) through a listing of these indices on his computer 16 until finding the index associated with the news program that he has recorded. Once the proper index is found, the user downloads the index to reside on his computer. In accordance with the present invention, a connection 22 (for example, an RS232 connection or infrared link) is established between computer 16 and VCR 12 to control the coordination of the recorded video playback with the index.

In order to find the particular segment(s) of the recorded program that the user wishes to access, he scrolls through the index as displayed on the computer screen and highlights the proper portion of the index (using a mouse click, for example). The index entries are time-stamped so that the timing information may be transmitted over connection 22 to VCR 12, causing VCR 12 to "fast forward" or "rewind" to precisely the desired location on the video.

As mentioned above, the index of the present invention may be created by either the broadcaster or a third party. In either case, an "index supplier" 24, as shown in FIG. 1 continuously works to create new indices and store them in a database system, represented by server 20. There are some commercial advantages that may also be offered by a commercial "index supplier". For example, the number of "hits" on a particular index (or class of indices - such as news shows, talk shows, etc.) may be useful information for the broadcaster in terms of assessing the success of various types of programming.

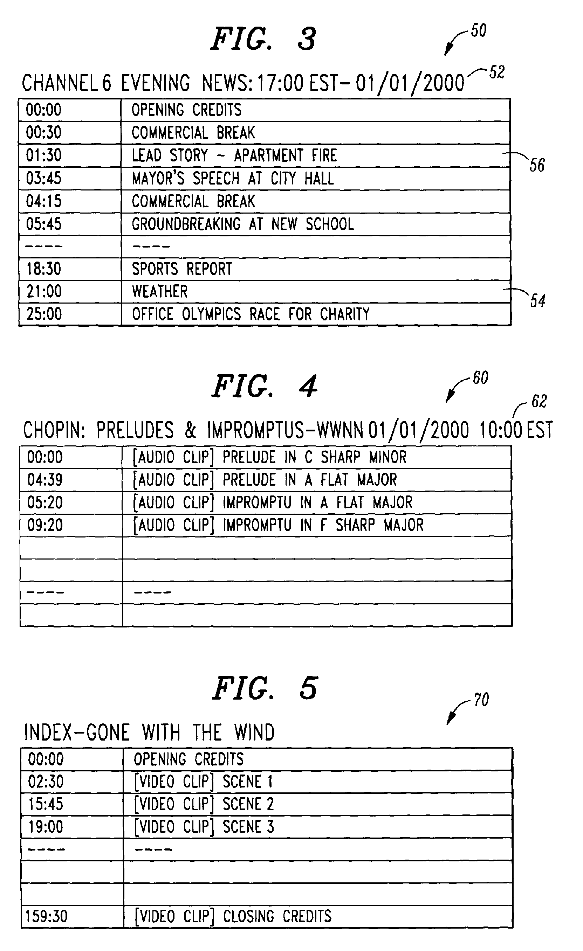

An index itself may take a variety of different forms. In a simplest embodiment, an index comprises a plurality of time-based textual representations of the various segments within a recording. As will be discussed in detail below, FIG. 3 illustrates this type of index. Alternatively (and particularly useful with an audio recording), relatively short audio "clips" may be used (with or without text) to identify the various segments within a recording. FIG. 4 illustrates an exemplary index listing including audio clips. Video clips may also be used (discussed with FIG. 5) and, in general, any combination of text, video and audio may be used in accordance with the teachings of the present invention.

FIG. 2 illustrates an exemplary computer screen 30 that could be presented to the user upon gaining access to server 20 containing the various on-demand indices. As mentioned above, the index-on-demand service may be implemented by either the broadcaster or by a third party vendor separate from the source of the broadcast material. Once the user is logged onto the index-on-demand service, a number of different "media" indices may be available, including those associated with radio programs 32 and television programs 34, as shown. A pop-up menu 36, associated with television listing 34 may be activated to select a particular channel 38 or time 40 for further browsing. Presuming the user has selected channel 6, as shown, a listing of indices 42 is next presented, where a short descriptor 44, is indicated for each time slot 46 for which an index has been created. Once the user has found the proper index, it may be selected for downloading onto computer 16. In this case, the index 50 associated with the evening news is selected and downloaded.

Referring to FIG. 3, downloaded evening news index 50 is illustrated in detail. As shown, evening news index 50 includes a header 52 defining the particular program, including the time and date of its original broadcast. The user may then scroll through index 50, searching for the particular news segment of interest. For example, if the user wanted to see the weather report, the computer would scroll down to field 54 in index 50 and the user would "select" this field (using a mouse click, for example). A time stamp indicating this index marking would then be transmitted from computer 16 to VCR 12 and used to "cue up" the recorded news to the proper location. In a preferred embodiment of the present invention, the beginning of the recording include a time stamp of 00:00, where each subsequent index segment would define elapsed time from this 00:00 start time. An advantage of the index-on-demand service of the present invention is that the user may view the recorded program in any desired order. That is, if the user wanted to review the news story related to the apartment fire after seeing the weather report, the user would merely scroll back upward through the index and "click" on field 56 associated with the time "cue" for the apartment fire report. Any number of such selections can be made.

It is assumed for the purposes of the present invention that the recording starts at the correct time (i.e., at the beginning of the program). This type of timing control can easily be accomplished by programming a VCR for recording, or using automatic VCR programming systems suited to this purpose (e.g., VCR Plus+). On programs recorded directly onto a computer, such timing can easily be controlled as well. In some cases, particularly where relatively "fine" index time increments are used (for example, defining intervals in terms of elapsed seconds), there may be some "skew" between the index segment time stamps and the actual recorded video. In this case, some "fine tuning" to re-synchronize the video with the index may be applied. In one embodiment of the present invention, a relatively short audio segment corresponding to the beginning of the recorded program may be downloaded with the index and included as a synchronization header 58 in the index file. In an alternative embodiment, an index sync signal could be embedded in a predetermined portion of the broadcast material and then used to coordinate the timing with a downloaded index. This approach, however, requires the broadcaster to be actively involved in the indexing service.

FIG. 4 illustrates an alternative index 60, this one associated with a recorded radio broadcast. In one embodiment of the present invention, the recorded broadcast may have been itself recorded from the Internet and then stored directly within computer 16. As shown, index 60 also contains a header field 62, in this case identifying the radio station, date and time of the recording. The remaining time-stamped fields include a short audio clip file of each piece of music included in the index, as well as a brief textual description of the piece. The user may therefore activate a particular index element and listen to the brief audio clip to determine if the selected piece is the one being searched for. Once the proper index element is found, the element is selected and a time-stamp signal is sent from the index file to the recording to being the playback of the selected piece. In a similar manner, relatively short video clips may be used as index elements, as shown an index file 70 of FIG. 5 associated with a recording of the movie *Gone With the Wind.* Various short clips from different scenes in the movie may be used as index elements, where the user may view the short clips, then select the desired portion of the movie to be viewed.

## Claims

1. A network-based server (20) comprising a plurality of separate indices associated with a plurality of pre-recorded broadcast programs, the server associated with an index-on-demand service (24), **characterized in that** each index comprises a time-based index (40) including a plurality of indexed segments (42) having descriptors (44,46) for each segment.

2. A network-based index-on-demand server as defined in claim 1 **characterized in that** the plurality of pre-recorded broadcast programs is **characterized by** a plurality of video programs.

3. A network-based index-on-demand server as defined in claim 1 **characterized in that** the plurality of pre-recorded broadcast programs is **characterized by** a plurality of audio programs.

4. A network-based index-on-demand server as defined in claim 1 **characterized in that** the segment descriptors is **characterized by** textual descriptors.

5. A network-based index-on-demand server as defined in claim 1 **characterized in that** the segment descriptors are **characterized by** at least audio descriptors.

6. A network-based index-on-demand server as defined in claim 5 **characterized in that** the segment descriptors is further **characterized by** textual descriptors associated with the audio descriptors.

7. A network-based index-on-demand server as defined in claim 1 **characterized in that** the segment descriptors are **characterized by** at least video descriptors.

8. A network-based index-on-demand server as defined in claim 7 **characterized in that** the segment descriptors are further **characterized by** textual descriptors associated with the video descriptors.

9. A network-based index-on-demand server as defined in claim 7 **characterized in that** the segment descriptors are further **characterized by** audio descriptors associated with the video descriptors.

10. A network-based index-on-demand server as defined in claim 7 **characterized in that** the segment descriptors are further **characterized by** audio and textual descriptors associated with the video descriptors.

11. A method of providing an index-on-demand service for use with a pre-recorded broadcast program, the method **characterized by** the steps of:
a) creating a time-based index for a broadcasted program (24), the index including a plurality of indexed segments (42,44,46), each segment having a descriptor associated therewith;
b) storing the created index in a server (20) that is accessible over a data network (18); and
c) repeating steps a) and b) for each desired pre-recorded broadcast program.

12. The provisioning method as defined in claim 11 **characterized in that** the plurality of pre-recorded broadcast programs is **characterized by** a plurality of video programs.

13. The provisioning method as defined in claim 11 **characterized in that** the plurality of pre-recorded broadcast programs is **characterized by** a plurality of audio programs.

14. The provisioning method as defined in claim 11 **characterized in that** in performing step a), textual descriptors are created.

15. The provisioning method as defined in claim 11 **characterized in that** in performing step a), audio descriptors are created.

16. The provisioning method as defined in claim 15 **characterized in that** in performing step a), textual descriptors are created for use with the audio descriptors.

17. The provisioning method as defined in claim 11 **characterized in that** in performing step a), video descriptors are created.

18. The provisioning method as defined in claim 17 **characterized in that** in performing step a), textual descriptors are created for use with the video descriptors.

19. The provisioning method as defined in claim 17 **characterized in that** in performing step a), audio descriptors are created for use with the video descriptors.

20. The provisioning method as defined in claim 17 **characterized in that** in performing step a), audio and textual descriptors are created for use with the video descriptors.

21. A method for searching through a pre-recorded program based on an index, the method **characterized by** the steps of:
a) accessing, using a computer (12), an index server (20) including a plurality of time-based index created for various pre-recorded programs, each index including a plurality of indexed segments (42,44,46) including descriptors for each segment;
b) browsing through the plurality of indices stored on the server and selecting a desired index;
c) downloading the selected index;
d) browsing through the selected index and selecting a particular index segment for playback;
e) transmitting the identity of the selected index segment to a recording device containing the pre-recorded program; and
f) continuing through steps d) and e) as many times as desired.

22. The provisioning method as defined in claim 21 **characterized in that** the plurality of pre-recorded broadcast programs include a plurality of video programs.

23. The provisioning method as defined in claim 21 **characterized in that** the plurality of pre-recorded broadcast programs include a plurality of audio programs.

24. The provisioning method as defined in claim 21 **characterized in that** in performing step a), each index includes textual descriptors.

25. The provisioning method as defined in claim 21 **characterized in that** in performing step a), each index includes audio descriptors.

26. The provisioning method as defined in claim 25 **characterized in that** in performing step a), textual descriptors are used with the audio descriptors.

27. The provisioning method as defined in claim 21 **characterized in that** in performing step a), each index includes video descriptors.

28. The provisioning method as defined in claim 27 **characterized in that** in performing step a), textual descriptors are used with the video descriptors.

29. The provisioning method as defined in claim 27 **characterized in that** in performing step a), audio descriptors are used with the video descriptors.

30. The provisioning method as defined in claim 27 **characterized in that** in performing step a), audio and textual descriptors are used with the video descriptors.
